# EUROPEAN PATENT SPECIFICATION

(11) **EP 2 801 230 B1**
(45) Date of publication and mention of the grant of the patent: **09.11.2016**
(21) Application number: 12726749.0
(22) Date of filing: 19.04.2012
(51) Int. Cl.: H04W 72/04, H04W 76/02

(54) **METHOD FOR SUPPORTING VEHICULAR COMMUNICATION IN A TDD-BASED COMMUNICATION SYSTEM AND TDD-BASED COMMUNICATION SYSTEM**
VERFAHREN ZUR UNTERSTÜTZUNG EINER FAHRZEUGKOMMUNIKATION IN EINEM TDD-BASIERTEN KOMMUNIKATIONSSYSTEM UND TDD-BASIERTES KOMMUNIKATIONSSYSTEM
PROCÉDÉ DE PRISE EN CHARGE DE COMMUNICATIONS ENTRE DES VÉHICULES DANS UN SYSTÈME DE COMMUNICATIONS BASÉ SUR TDD, ET SYSTÈME DE COMMUNICATIONS BASÉ SUR TDD

(43) Date of publication of application: 12.11.2014
(73) Proprietor: NEC CORPORATION, Tokyo 108-8001 (JP)
(72) Inventor: MAEDER, Andreas, 97072 Würzburg (DE); LE, Long, 12353 Berlin (DE)
(74) Representative: Patent- und Rechtsanwälte Ullrich & Naumann
(86) International application number: PCT/EP2012/057193
(87) International publication number: WO 2013/156072

(56) References cited:
- EP-A1- 1 389 856
- EP-A1- 2 120 505
- WO-A1-2011/098128
- SHAOYI XU ET AL: "Effective Labeled Time Slots Based D2D Transmission in Cellular Downlink Spectrums", 2010 IEEE VEHICULAR TECHNOLOGY CONFERENCE (VTC 2010-SPRING) - 16-19 MAY 2010 - TAIPEI, TAIWAN, IEEE, US, 16 May 2010 (2010-05-16), pages 1-5, XP031696082, ISBN: 978-1-4244-2518-1

## Description

The present invention relates to a method for supporting vehicular communication in a TDD-based communication system, comprising at least one base station and a plurality of vehicles being equipped with mobile communication devices, wherein the radio resources of the communication system are divided in time into consecutive frames, the frames being partitioned into downlink subframes for transmissions from a base station to the mobile communication devices and into uplink subframes for transmissions from the mobile communication devices to a base station, wherein the frames further include peer-to-peer subframes being assigned to mobile communication devices for direct communication between mobile communication devices, and wherein a base station divides its coverage into segments in such a way that simultaneous transmissions within the same peer-to-peer subframe being performed in different segments do not interfere with each other.

Furthermore, the present invention relates to a TDD-based communication system with vehicular communication support, comprising at least one base station and a plurality of vehicles being equipped with mobile communication devices, wherein the radio resources of the communication system are divided in time into consecutive frames, the frames being partitioned into downlink subframes for transmissions from a base station to the mobile communication devices and into uplink subframes for transmissions from the mobile communication devices to a base station, wherein the at least one base station is configured to further partition the frames by including peer-to-peer subframes being assigned to mobile communication devices for direct communication between mobile communication devices, and to divide its coverage into segments in such a way that simultaneous transmissions within the same peer-to-peer subframe being performed in different segments do not interfere with each other.

Still further, the present invention relates to a base station for deployment in TDD-based communication system.

Vehicular communication is a key technology in the roadmap of the future Intelligent Transport Systems (ITS) because it promises to improve road safety and traffic efficiency. Currently, vehicular communication is premised on the concept that vehicles and road infrastructure form a vehicular ad hoc network (VANET) in a spontaneous manner to exchange information with each other over the wireless medium. Major effort has been invested in developing ad hoc vehicular communication using short-range communication technologies such as IEEE 802.11 (WLAN). However, a major deployment problem that vehicular communication is currently facing is that it is a cooperative technology, i.e., its effects can be best realized when a certain percentage of vehicles are equipped with this technology. Thus, while there is a great momentum behind the technological development for vehicular communication, the deployment for this system appears rather slow (or stagnant).

An effective bootstrapping strategy for the deployment of vehicular communication could be to rely on the next generation of mobile communication. With the advent of smart phones and the deployment of 4G mobile communication, the development of mobile high-speed Internet is gaining great momentum and can be helpful for the deployment of vehicular communication. Vehicle manufacturers can equip their vehicles with a smart phone that offers a wide range of applications without relying on the cooperative nature of vehicular communication. On the other hand, smart phones equipped in the vehicles can also be used as a communication device that allows vehicles to exchange messages with each other and/or communicate with the transportation infrastructure.

An important application message in vehicular communication is beacon message, also called heartbeat, basic safety message, or cooperative awareness message (CAM). This message is periodically broadcast by each vehicle and contains the vehicle's status such as vehicle's position, speed, and heading. This message allows a vehicle to be aware of others in its surrounding. Using the periodic CAM messages received from others, a vehicle can detect potential collisions with other vehicles in its vicinity. Since this message serves important safety purposes, it requires low communication latency (e.g. below 100 ms). A recent study - M. Phan, R. Rembarz, and S. Sories: "A Capacity Analysis for the Transmission of Event and Cooperative Awareness Messages in LTE Networks", ITS World Congress 2011, October 2011, Orlando, USA - showed that current LTE-based vehicular communication cannot offer low communication latency that would meet the stringent requirements for road safety applications. Further, this same study also showed that periodic CAMs can increase the load in a radio cell significantly.

EP 1 389 856 A1 discloses a method for allocating radio communication resources in a self-organizing (e.g. TDD-based) radio communication system. The radio resources of the communication system are divided in time into consecutive phases including an Uplink phase, a Downlink phase and a Direct Link phase (DiL phase) for direct communication between user stations. The resource allocation occurring during direct communication between user stations can be monitored and controlled by a central entity, e.g. by a wireless access point (AP). At least two first user stations communicating with one another while using the same resources and on the other hand at least two second user stations communicating with one another while using the same resources are in each case situated in different areas of the radio communication system, between which essentially no interference exists during the communication while using the resources.

It is an object of the present invention to improve and further develop a method and a base station of the initially described type for supporting vehicular communication in a TDD-based communication system in such a way that the efficiency for the base station to control peer-to-peer subframe assignment and coverage segmentation is improved, in order to reduce interference as far as possible.

In accordance with the invention, the aforementioned object is accomplished by a method comprising the features of claim 1. According to this claim, such a method is characterized in that the base station maintains a location table that keeps track of the current positions of the vehicles in its coverage area.

Furthermore, the aforementioned object is accomplished by a TDD-based communication system comprising the features of claim 10. According to this claim, such a system is characterized in that the at least one base station is further configured to maintain a location table that keeps track of the current positions of the vehicles in its coverage area.

Still further, the aforementioned object is accomplished by a base station comprising the features of claim 15. According to this claim, such a base station is configured to maintain a location table that keeps track of the current positions of the vehicles in its coverage area.

According to the invention it has first been recognized that the aforementioned object can be achieved by exploiting the local data exchange of direct device-to-device communication (D2D) and spatial reuse of the wireless spectrum in a base station's coverage. To this end, peer-to-peer subframes are employed that base stations assign to mobile communication devices for direct communication between them. By way of enabling direct D2D communication, local data traffic is offloaded from the mobile networks. Furthermore, in order to make D2D suitable for vehicular communication, base stations divide their coverage into segments (geographic zones) in such a way that simultaneous transmissions in different segments do not interfere with each other. In this way, the spatial reuse, and ultimately the cell capacity, is increased so that vehicular communication becomes more scalable in terms of load and attains low communication latency for the broadcast of periodic messages.

Specifically, according to the invention the base station maintains a location table that keeps track of all vehicles in its coverage area. For instance, this location table may be maintained based on received registration messages from the vehicles. In this case, i.e. when the base station collects registration messages from all vehicles in its coverage, it is aware of the vehicles' current position. It is noted that while the vehicles' location update incurs a signaling overhead, this overhead is low when compared to the periodic messages (e.g., CAM) transmitted by the vehicles. On average, the location update is transmitted once per second whereas periodic CAMs are transmitted at a frequency of 10 Hz.

The present invention can be suitably applied, though not limited thereto, to LTE networks. While current state-of-the-art solutions cannot address performance issues for ITS domain in LTE-based vehicular communication, like low delay/latency and high scalability, according to the present invention the latency for data exchange between vehicles in LTE-based vehicular communication is significantly reduced. Since latency plays an important role for traffic safety, the present invention improves the effectiveness for ITS safety applications. Moreover, by increasing spatial reuse within a base station's coverage area, the cell capacity is increased, thereby improving the scalability for LTE-based vehicular communication, e.g., by applying embodiments of methods according to the invention more vehicles can be served by a base station.

With respect to achieving consistency with existing mechanisms in may be provided that according to an embodiment the peer-to-peer subframes, like the uplink and downlink subframes, are controlled by the base station. This means that while data is exchanged directly between mobile communication devices, i.e. without the base station being involved in the data transmissions, the base station is still in the control of the network and assigns resources/timeslots to the vehicles.

In order to enable the base station to effectively control the assignment of peer-to-peer subframes, it may be provided that each mobile communication device contained in a vehicle transmits a registration message (like a location update) to the base station, preferably on a periodical basis (e.g. once per second). According to an embodiment, the registration messages may contain the vehicle ID (i.e. the ID of the vehicle to which said mobile communication device is associated), its position, its heading and a timestamp. As will be appreciated by those skilled in the art, the registration messages may contain further information elements and/or different combinations of information.

According to a preferred embodiment, the mobile communication devices are configured to use a lower level of transmit power in the peer-to-peer subframes than that of the uplink subframes. Such implementation proves to be advantageous for two reasons. First, data messages in vehicular communication usually contain local importance (i.e., the presence of a vehicle in a given vicinity). Second, low transmit power allows spatial reuse of the same subframe at different geographic locations that are sufficiently far away from each other, i.e. mobile communication devices that are far away from each other can transmit a message in a peer-to-peer subframe simultaneously. With a low transmit power level for device-to-device communication, a base station's coverage area (typically a few km²) can be broken into multiple subareas (typically a few hundred m²) such that data transmissions in these different subareas can take place at the same time without interfering with each other.

Advantageously, the base station is configured to treat each segment as an independent zone with regard to the assignment of the P subframes to the UEs. This means that the same P subframe can be assigned to different UEs if these UEs belong to different segments. Thus, spatial reuse is increased with the number of segments.

According to an embodiment, the base station may generate the segments according to geography locations. For instance, in order to realize a suitable adaptation to real traffic scenarios the segments may be aligned along a street. In this case, a vehicle may be assigned to a segment if it moves into a certain geographic area.

According to another embodiment, the base station may generate the segments according to the current interference situation in the network. In this case, vehicles may form clusters which are distant enough from each other to avoid mutual interference. In this way, segments may move along with vehicles as long as the relative distance, and therefore also the propagation condition between vehicles, does not change significantly.

In order to alleviate the problem that vehicles that are closely located to each other cannot communicate directly with each other because they belong to different segments, it may be provided that vehicles are grouped to different segments in a sliding manner. According to another embodiment, a time-varying assignment of time slots may be realized to allow vehicles nearby to communicate directly with each other. In other words, the base station divides its coverage into varying segments in such a way that nearby vehicles belong to the same segment from time to time in order to enable these vehicles to directly communicate with each other. Regarding the timescale it may be provided, for instance, that a base station changes the segmentation of its coverage from frame to frame.

According to a preferred embodiment, it may be provided that a base station determines the subareas/segments for each epoch in a dynamic and flexible manner according to some optimization criteria. In this regard, the length of an epoch may be defined to correspond to the frame duration. Segments within a base station's coverage area do not necessarily have the same size. For example, when the vehicle density on different streets or street segments is heterogeneous, the base station can choose small subareas when the vehicle density is high (thus increasing the spatial reuse). On the other hand, when the vehicle density for some streets or street segments is low, the base station can select larger subareas (thus increasing the communication range between vehicles in these subareas).

According to another preferred embodiment, it may be provided that a base station is configured to define alternative sets of segments, wherein each set of subareas may cover the entire coverage area of the base station. The base station may then use for each of its frames another set of segments from the alternative sets of segments. In other words, the base station cycles through all the sets of subareas such that a set of subarea is active for a base station's frame. The base station may then group or cluster the vehicles according to the subareas of the active set. For example, there are different ways to divide a base station's coverage area into smaller circles or rectangles. Each circle or rectangle can be a subarea and each of the ways for partitioning presents a set of subareas.

It is noted that it is possible that subareas within a base station's coverage area overlap with each other. Using this portioning, UEs could easily listen to broadcasts of several subareas simultaneously (assuming that TD-LTE is used).

When a vehicle leaves the coverage area of a base station and moves to the coverage of another base station, a handover between the two base stations takes place. The handover for the P subframes may be similar to that for the U and D subframes. Since the current base station keeps track of the vehicle's position, it can prepare for the handover and inform its neighbor base station about the current vehicle's position when detecting that the vehicle is about to leave its coverage area. The new base station can create a temporary entry in its location table for the vehicle and starts assigning P subframes for this vehicle. The temporary entry for the vehicle may be configured to be only valid for a short time period in the location table (e.g. 1-2 seconds) and will be deleted if the vehicle does not send any location update within this period.

There are several ways how to design and further develop the teaching of the present invention in an advantageous way. To this end it is to be referred to the patent claims subordinate to patent claims 1 and 10 on the one hand and to the following explanation of preferred embodiments of the invention by way of example, illustrated by the figure on the other hand. In connection with the explanation of the preferred embodiments of the invention by the aid of the figure, generally preferred embodiments and further developments of the teaching will we explained. In the drawing
- Fig. 1: is a schematic view illustrating device-to-device communication in an LTE-based vehicular communication scenario,
- Fig. 2: is a schematic view illustrating segment breakdown according to an embodiment of the present invention,
- Fig. 3: is a schematic view illustrating assignment of peer-to-peer subframes in different segments according to an embodiment of the present invention, and
- Fig. 4: is a schematic view illustrating sliding assignment of vehicles to different geographic segments according to an embodiment of the present invention.

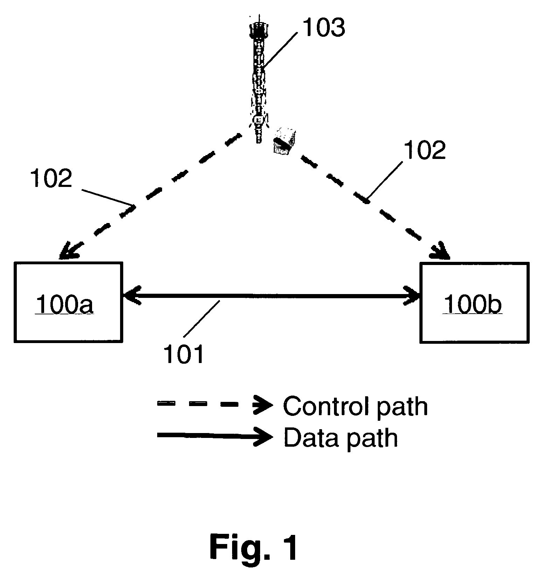

The embodiments of the present invention described hereinafter in some more detail in connection with Figs. 1-4 all relate to LTE (Long Term Evolution) networks. Consequently, the terminology employed hereinafter is adapted to the LTE terminology, i.e. a mobile communication device is briefly denoted UE (User Equipment) and a base station is referred to as eNodeB. However, as will be appreciated by those skilled in the art the application of the present invention is not limited to LTE networks. In fact, it is possible to apply the invention in any other TDD-based mobile cellular networks, like for instance UMTS networks.

In TD-LTE, radio resources are divided in time into consecutive frames. In turn, a frame is partitioned into uplink and downlink subframes, as described in document 3GPP, "TS 36.211 V10.4.0; Evolved Universal Terrestrial Radio Access (E-UTRA); Physical Channels and Modulation", Dec. 2011. Downlink subframes are used for data transmission from a base station (eNodeB) to the user equipment (UE). Uplink subframes are used for data transmission from UEs to a base station. Thus, in TD-LTE, all data transmissions go to or come from a base station. Furthermore, most mobile cellular networks (including LTE, UMTS, etc) implement a hierarchical network topology. User data is transported from the base station in the radio access network (RAN) into the core network (CN) to only a few gateways (packet data network gateway - PDN-GW - in LTE networks), regardless of the destination of the traffic flow. This implies that in vehicular communication scenarios, where UEs often communicate with other UEs in the same radio cell, data is transported to the base station, from there to the PDN-GW in the core network, and then back to the same base station which transmits it to the destination UE. This design has an adverse impact on the scalability and the performance of LTE-based vehicular communication.

To alleviate this shortcoming, it is better for UEs to communicate with each other directly. For this communication mechanism (device-to-device communication), data is exchanged directly between the UEs but the base station is still in the control of the network and assigns the time slots to the vehicles. The idea of device-to-device communication is illustrated in Fig. 1, where two vehicles 100a and 100b communicate directly with each other via data path 101. The respective control path 102 is established via eNodeB 103. While device-to-device communication has been proposed in 3GPP for offloading local data traffic from the mobile networks, it is currently not suited for vehicular communication. The present invention aims at refining device-to-device communication such that it can support vehicular communication efficiently. It presents a technical solution that supports the periodic broadcast of CAMs over LTE-based vehicular communication by solving the two problems: communication latency and load scalability for LTE-based vehicular communication. Overall, the present invention improves the network capacity so that LTE-based vehicular communication becomes more scalable in terms of load and attains low communication latency for the broadcast of periodic messages.

For device-to-device communication, a new type of time subframes, denoted peer-to-peer subframes or P, is defined so that UEs can communicate directly with each other. Like the uplink and downlink subframes, the peer-to-peer subframes are controlled by the base station. However, once a P subframe is assigned to a UE, this UE can use this time slot to transmit its data to other UE(s) (in a unicast or broadcast fashion). The following table illustrates an example of an existing TD-LTE frame configuration containing D (downlink) subframes, U (uplink) subframes, and S (switching) subframes, as specified in the above mentioned 3GPP standard documentation:

| **Uplink-downlink configuration** | **Downlink-to-Uplink Switch-point periodicity** | **Subframe number** | | | | | | | | | |
|---|---|---|---|---|---|---|---|---|---|---|---|
| | | **0** | **1** | **2** | **3** | **4** | **5** | **6** | **7** | **8** | **9** |
| 0 | 5 ms | D | S | U | U | U | D | S | U | U | U |
| 1 | 5 ms | D | S | U | U | D | D | S | U | U | D |
| 2 | 5 ms | D | S | U | D | D | D | S | U | D | D |
| 3 | 10 ms | D | S | U | U | U | D | D | D | D | D |
| 4 | 10 ms | D | S | U | U | D | D | D | D | D | D |
| 5 | 10 ms | D | S | U | D | D | D | D | D | D | D |
| 6 | 5 ms | D | S | U | U | U | D | S | U | U | D |

In contrast, an example of the new frame structure in TD-LTE including additional P (peer-to-peer) subframes is shown in the following table:

| **Uplink-downlink configuration** | **Downlink-to-Uplink Switch-point periodicity** | **Subframe number** | | | | | | | | | |
|---|---|---|---|---|---|---|---|---|---|---|---|
| | | **0** | **1** | **2** | **3** | **4** | **5** | **6** | **7** | **8** | **9** |
| 6 | 5 ms | D | S | U | U | D | D | U | P | P | P |

According to the above table, the base station assigns three subframes of a frame - subframes 7, 8 and 9 - as P subframes to UEs within its coverage area for the purpose of direct device-to-device communication.

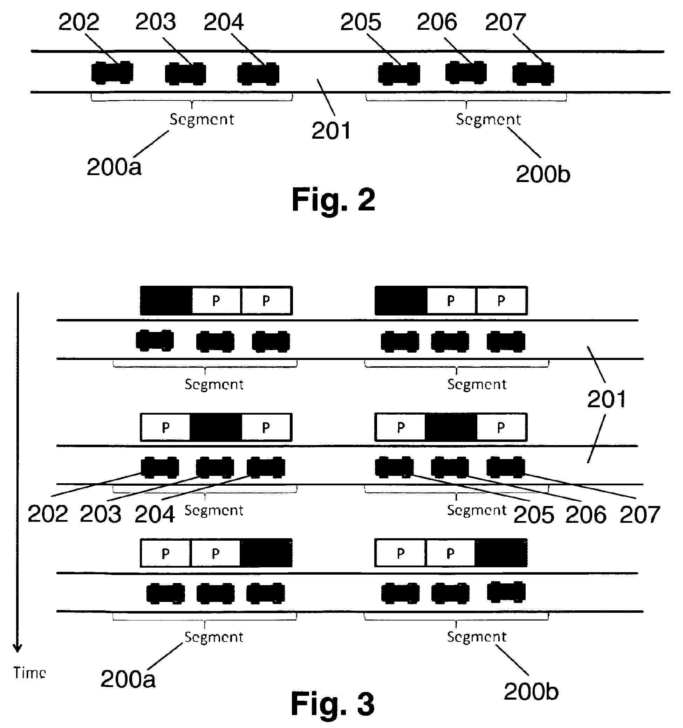

As illustrated for a specific embodiment in Fig. 2, the base station divides its coverage into segments, i.e. their coverage area is partitioned into geographic zones, such that simultaneous transmissions in different segments/zones do not interfere with each other. In this way, i.e. by using a plurality of segments for simultaneous transmissions among the UEs, the spatial reuse, and ultimately the cell capacity, can be significantly increased. Since the messages exchanged among the UEs have only local importance, the UEs can use a low level of transmit power in the P subframes (as compared to the transmit power used in U subframes). As a result, further increase of the cell capacity can be achieved.

Generally, the segments may be aligned according to geography locations. For instance, in the embodiment of Fig. 2, the segments 200 are aligned along a street 201. For the purpose of simplification and clarity, only two segments 200a and 200b are depicted in Fig. 2. It will be appreciated by those skilled in the art that in real scenarios the coverage area of a base station may be partitioned according to geography locations, e.g. along a street, into a plurality of segments, e.g. several tens or even hundreds of segments.

A vehicle is assigned to a segment if it moves into a certain geographic area. For instance, in the situation illustrated in Fig. 2, vehicles 202, 203 and 204 are assigned to segment 200a, whereas vehicles 205, 206 and 207 are assigned to segment 200b. Since the segments are bound to geographic locations and since the vehicles are moving, vehicles will be leaving the area of a certain segment and will enter into the area of another segment. For instance, assuming that the vehicles depicted in Fig. 2 move from left to right, vehicle 204 is about to leave segment 200a and will shortly afterwards enter into segment 200b.

The base station treats each segment as an independent zone with regard to the assignment of the P subframes to the UEs. This means that the same P subframe can be assigned to different UEs if these UEs belong to different segments. Thus, spatial reuse is increased with the number of segments.

An illustration of the assignment of the P subframes in different segments is depicted in Fig. 3. Same reference numerals denote the same components as in connection with Fig. 2.

In Fig. 3 the time axis is depicted in vertical direction. At a first point in time (upper part of Fig. 3), a P subframe within segment 200a is assigned to vehicle 202 (as indicated by the darkened P subframe) and to vehicle 205 within segment 200b. Due to this assignment, vehicles 202 and 205 are enabled to transmit data, either in a unicast or in a broadcast fashion. At a later point in time, e.g. one subframe on one frame later, the assignment of P subframes changes, as illustrated in the middle part of Fig. 3, where a P subframe within segment 200a is assigned to vehicle 203 and within segment 200b to vehicle 206. Still later (illustrated in the lower part of Fig. 3), a P subframe within segment 200a is assigned to vehicle 204 and within segment 200b to vehicle 207.

It is noted that a P subframe may be assigned to multiple vehicles that belong to different segments as long as they are sufficiently far from each other such that their simultaneous transmissions do not interfere with each other.

An issue that arises in the assignment of P subframes in different segments is that vehicles near the boundary of segments cannot communicate with each other because these vehicles belong to different segments. For instance, in the situation of Fig. 2, vehicles 204 and 205, although closely located to each other, cannot communicate with each other directly, since they belong to different segments. To alleviate this problem, vehicles may be grouped to different segments in a sliding manner. Thus, if two specific vehicles belong to different segments in a particular time interval, they can be in the same group and exchange data with each other in the next time interval.

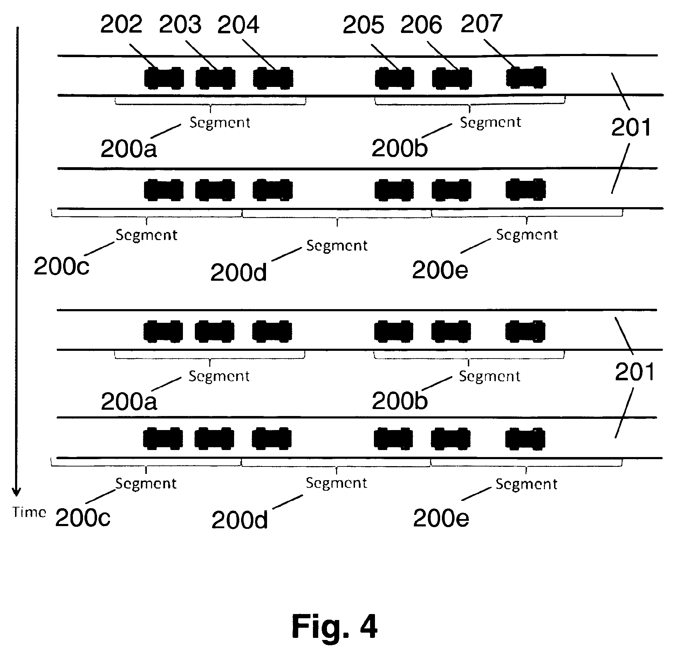

An illustration of an embodiment of sliding scheduling is shown in Fig. 4. Again, same reference numerals denote the same components as in connection with Figs. 2 and 3. The situation illustrated in the upper part of Fig. 4 corresponds with the illustrated in Fig. 2. In this situation the problem arises that, e.g., vehicles 204 and 205 cannot communicate with each other, as mentioned above. After a specific time interval the base station modifies the segmentation in order to alleviate this problem. More specifically, the depicted part of the street 201 is now covered by a total of three segments 200c, 200d, and 200e. Since vehicles 204 and 205 are now located in the same segment, which is segment 200d, they are enabled to communicate directly with each other. After another time interval the base station returns to the previous segmentation with segments 200a and 200b, and, after the next time interval, it switches again to the segmentation with the three segments 200c, 200d, and 200e, etc. In the illustrated case, the period of sliding grouping is 2 and the sliding scheduling reduces to alternate grouping. However, as will be appreciated by those skilled in the art, more complex sliding schedules may be applied depending on the specific radio environment and traffic situation.

Generally, sliding patterns of grouping/clustering vehicles can be determined by applying the following pseudo code for vehicles and a base station:

### Vehicles' algorithm:

Define: P = period for sliding grouping
Define: K = const (tuning parameter)

For each K*P interval
- Use an assigned U subframe to send a location update containing vehicle ID and current geographic position to the base station

For each frame
- Await the assignment of P subframes from the base station
- Use the subframes to transmit ITS safety and service messages (e.g., CAM)

### Base station's algorithm

Define: D = segment size
Define: P = period for sliding grouping

Maintain a location table for all vehicles in the coverage area
- Upon receiving a vehicle's location update, update the location table

For each interval T(k), e.g. multiples of a frame (i.e. multiples of 5 ms), where k is a counter
- Compute segment offset: offset = (k % P) * D / P
- Determine geographic segment: Z(i) = [offset + D * i, offset + D * (i + 1)), where i is an index of clusters
- Determine vehicles that belong to each segment according to their reported geographic position
- Sort vehicles in each segment in increasing order of their geographic positions
- Perform scheduling for assignment of P subframes to vehicles according to their sorted order in each segment.

Many modifications and other embodiments of the invention set forth herein will come to mind the one skilled in the art to which the invention pertains having the benefit of the teachings presented in the foregoing description and the associated drawings. Therefore, it is to be understood that the invention is not to be limited to the specific embodiments disclosed and that modifications and other embodiments are intended to be included within the scope of the appended claims. Although specific terms are employed herein, they are used in a generic and descriptive sense only and not for purposes of limitation.

## Claims

1. Method for supporting vehicular communication in a TDD-based communication system, comprising at least one base station (103) and a plurality of vehicles (202, 203, 204, 205, 206, 207) being equipped with mobile communication devices,
wherein the radio resources of the communication system are divided in time into consecutive frames, the frames being partitioned into downlink subframes for transmissions from a base station to the mobile communication devices and into uplink subframes for transmissions from the mobile communication devices to a base station (103),
wherein the frames further include peer-to-peer subframes being assigned to mobile communication devices for direct communication between mobile communication devices, and
wherein a base station (103) divides its coverage into segments (200) in such a way that simultaneous transmissions within the same peer-to-peer subframe being performed in different segments (200) do not interfere with each other,
**characterized in that** the base station (103) maintains a location table that keeps track of the current positions of the vehicles (202, 203, 204, 205, 206, 207) in its coverage area.

2. Method according to claim 1, wherein peer-to-peer subframes are controlled by the base station (103).

3. Method according to claim 1 or 2, wherein mobile communication devices transmit a registration message to the base station (103) in periodic time intervals,
wherein each registration message sent by a mobile communication device preferably includes an ID of the vehicle to which said mobile communication device is associated, said vehicle's position, said vehicle's direction of motion, and/or a timestamp.

4. Method according to any of claims 1 to 3, wherein mobile communication devices use a reduced transmit power for transmissions in peer-to-peer subframes compared to the transmit power used for transmissions in uplink subframes.

5. Method according to any of claims 1 to 4, wherein the base station (103) treats each segment (200) as an independent zone with regard to the assignment of peer-to-peer subframes to mobile communication devices, and/or
wherein the segments (200) of a base station's (103) coverage are aligned along streets (201).

6. Method according to any of claims 1 to 5, wherein the segments (200) of a base station's (103) coverage are created on the basis of the current interference situation within the communication system, and/or
wherein the segments (200) of a base station's (103) coverage are created in such a way that vehicles (202, 203, 204, 205, 206, 207) form clusters which are distant enough from each other to avoid mutual interference, and/or
wherein vehicles (202, 203, 204, 205, 206, 207) are grouped to different segments (200) from time to time.

7. Method according to any of claims 1 to 6, wherein a base station (103) changes the segmentation of its coverage from frame to frame, and/or
wherein a base station (103) creates the segmentation of its coverage dynamically according to pre-defined optimization criteria, and/or
wherein a base station (103) creates the segmentation of its coverage by adapting the size of segments (200) to the local vehicle density.

8. Method according to any of claims 1 to 7, wherein alternative sets of segments (200) are defined, wherein a base station (103) uses for each of the base station's (103) frames another set of segments (200) from said alternative sets of segments (200).

9. Method according to any of claims 1 to 8, wherein a handover of a vehicle from one base station - current base station - to another base station - new base station - includes the steps of
said current base station keeping track of a vehicle's position,
said current base station informing said new base station of the current vehicle's position when detecting that the vehicle is about to leave its coverage,
the new base station creating a temporary entry in its location table for the vehicle, and
the new base station starting to assign peer-to-peer subframes for the vehicle.

10. TDD-based communication system with vehicular communication support, comprising at least one base station (103) and a plurality of vehicles (202, 203, 204, 205, 206, 207) being equipped with mobile communication devices,
wherein the radio resources of the communication system are divided in time into consecutive frames, the frames being partitioned into downlink subframes for transmissions from a base station (103) to the mobile communication devices and into uplink subframes for transmissions from the mobile communication devices to a base station (103),
wherein the at least one base station (103) is configured to further partition the frames by including peer-to-peer subframes being assigned to mobile communication devices for direct communication between mobile communication devices, and to divide its coverage into segments (200) in such a way that simultaneous transmissions within the same peer-to-peer subframe being performed in different segments (200) do not interfere with each other, **characterized in that** the at least one base station (103) is further configured to maintain a location table that keeps track of the current positions of the vehicles (202, 203, 204, 205, 206, 207) in its coverage area.

11. Communication system according to claim 10, wherein the base station (103) is configured to control peer-to-peer subframes.

12. Communication system according to claim 10 or 11, wherein the base station (103) is configured to treat each segment (200) as an independent zone with regard to the assignment of peer-to-peer subframes to mobile communication devices, and/or
wherein the base station (103) is configured to align the segments (200) along streets (201).

13. Communication system according to any of claims 10 to 12, wherein the base station (103) is configured to create the segments (200) on the basis of the current interference situation within the communication system, and/or
wherein the base station (103) is configured to create the segments (200) in such a way that vehicles (202, 203, 204, 205, 206, 207) form clusters which are distant enough from each other to avoid mutual interference, and/or
wherein the base station (103) is configured to group vehicles (202, 203, 204, 205, 206, 207) to different segments (200) from time to time.

14. Communication system according to any of claims 10 to 13, wherein the base station (103) is configured to change the segmentation of its coverage from frame to frame, and/or
wherein the base station (103) is configured to create the segmentation of its coverage dynamically according to pre-defined optimization criteria, and/or
wherein the base station (103) is configured to create the segmentation of its coverage by adapting the size of segments (200) to the local vehicle density.

15. Base station for deployment in a TDD-based communication system according to any of claims 10 to 14, wherein the base station is configured
to further partition the frames by including peer-to-peer subframes being assigned to mobile communication devices for direct communication between mobile communication devices, and
to divide its coverage into segments (200) in such a way that simultaneous transmissions within the same peer-to-peer subframe being performed in different segments (200) do not interfere with each other,
**characterized in that** the base station is further configured to maintain a location table that keeps track of the current positions of the vehicles (202, 203, 204, 205, 206, 207) in its coverage area.

## Patentansprüche

1. Verfahren zur Unterstützung einer Fahrzeugkommunikation in einem TDDbasierten Kommunikationssystem, umfassend mindestens eine Basisstation (103) und eine Vielzahl von Fahrzeugen (202, 203, 204, 205, 206, 207), die mit mobilen Kommunikationsgeräten ausgestattet sind,
wobei die Funkressourcen des Kommunikationssystems in der Zeit in aufeinanderfolgende Rahmen unterteilt sind, wobei die Rahmen in Downlink-Unterrahmen für Übertragungen von einer Basisstation zu den mobilen Kommunikationsgeräten und in Uplink-Unterrahmen für Übertragungen von den mobilen Kommunikationsgeräten zu einer Basisstation (103) aufgeteilt sind,
wobei die Rahmen zudem Peer-to-Peer Unterrahmen umfassen, die mobilen Kommunikationsgeräten für eine direkte Kommunikation zwischen mobilen Kommunikationsgeräten zugewiesen sind, und
wobei eine Basisstation (103) ihren Versorgungsbereich derart in Segmente (200) unterteilt, dass gleichzeitige Übertragungen innerhalb desselben Peer-to-Peer Unterrahmens, die in verschiedenen Segmenten (200) durchgeführt werden, nicht miteinander interferieren,
**dadurch gekennzeichnet, dass** die Basisstation (103) eine Positionstabelle unterhält, die einen Überblick über die aktuellen Positionen der Fahrzeuge (202, 203, 204, 205, 206, 207) in ihrem Versorgungsbereich behält.

2. Verfahren nach Anspruch 1, wobei Peer-to-Peer Unterrahmen von der Basisstation kontrolliert werden (103).

3. Verfahren nach Anspruch 1 oder 2, wobei mobile Kommunikationsgeräte in periodischen Zeitintervallen eine Registrierungsnachricht an die Basisstation (103) übertragen,
wobei jede von einem mobilen Kommunikationsgerät gesendete Registrierungsnachricht vorzugsweise eine ID des Fahrzeugs, dem das mobile Kommunikationsgerät zugeordnet ist, die Position dieses Fahrzeugs, die Bewegungsrichtung dieses Fahrzeugs und/oder einen Zeitstempel umfasst.

4. Verfahren nach einem der Ansprüche 1 bis 3, wobei mobile Kommunikationsgeräte für Übertragungen in Peer-to-Peer Unterrahmen eine im Vergleich zur Sendeleistung, die für Übertragungen in Uplink-Unterrahmen verwendet wird, reduzierte Sendeleistung verwenden.

5. Verfahren nach einem der Ansprüche 1 bis 4, wobei die Basisstation (103) jedes Segment (200) im Hinblick auf die Zuweisung von Peer-to-Peer Unterrahmen zu mobilen Kommunikationsgeräten als eine unabhängige Zone behandelt, und/oder
wobei die Segmente (200) des Versorgungsbereichs einer Basisstation (103) entlang von Straßen (201) ausgerichtet sind.

6. Verfahren nach einem der Ansprüche 1 bis 5, wobei die Segmente (200) des Versorgungsbereichs einer Basisstation (103) auf der Basis der aktuellen Interferenzsituation innerhalb des Kommunikationssystems erzeugt werden, und/oder
wobei die Segmente (200) des Versorgungsbereichs einer Basisstation (103) derart erzeugt werden, dass Fahrzeuge (202, 203, 204, 205, 206, 207) Cluster bilden, die weit genug voneinander entfernt sind, um gegenseitige Interferenz zu vermeiden, und/oder
wobei Fahrzeuge (202, 203, 204, 205, 206, 207) von Zeit zu Zeit zu unterschiedlichen Segmenten (200) gruppiert werden.

7. Verfahren nach einem der Ansprüche 1 bis 6, wobei eine Basisstation (103) die Segmentierung ihres Versorgungsbereichs von Rahmen zu Rahmen ändert, und/oder
wobei eine Basisstation (103) die Segmentierung ihres Versorgungsbereichs dynamisch entsprechend vordefinierter Optimierungskriterien erzeugt, und/oder
wobei eine Basisstation (103) die Segmentierung ihres Versorgungsbereichs erzeugt, indem die Größe der Segmente (200) an die lokale Fahrzeugdichte angepasst wird.

8. Verfahren nach einem der Ansprüche 1 bis 7, wobei alternative Sätze von Segmenten (200) definiert werden, wobei eine Basisstation (103) für jeden Rahmen der Basisstation (103) einen anderen Satz von Segmenten (200) aus diesen alternativen Sätzen von Segmenten (200) verwendet.

9. Verfahren nach einem der Ansprüche 1 bis 8, wobei eine Übergabe eines Fahrzeugs von einer Basisstation - aktuelle Basisstation - zu einer anderen Basisstation - neue Basisstation - die folgenden Schritte umfasst:
die aktuelle Basisstation verfolgt die Position eines Fahrzeugs,
die aktuelle Basisstation informiert die neue Basisstation über die aktuelle Position des Fahrzeugs, wenn sie erkennt, dass das Fahrzeug dabei ist, ihren Versorgungsbereich zu verlassen,
die neue Basisstation erzeugt einen temporären Eintrag in ihrer Positionstabelle für das Fahrzeug, und
die neue Basisstation beginnt, für das Fahrzeug Peer-to-Peer Unterrahmen zuzuweisen.

10. TDD-basiertes Kommunikationssystem mit Unterstützung einer Fahrzeugkommunikation, mit mindestens einer Basisstation (103) und einer Vielzahl von Fahrzeugen (202, 203, 204, 205, 206, 207), die mit mobilen Kommunikationsgeräten ausgestattet sind,
wobei die Funkressourcen des Kommunikationssystems in der Zeit in aufeinanderfolgende Rahmen unterteilt sind, wobei die Rahmen in Downlink-Unterrahmen für Übertragungen von einer Basisstation (103) zu den mobilen Kommunikationsgeräten und in Uplink-Unterrahmen für Übertragungen von den mobilen Kommunikationsgeräten zu einer Basisstation (103) aufgeteilt sind,
wobei die mindestens eine Basisstation (103) derart konfiguriert ist, dass sie die Rahmen weiter partitioniert, indem sie Peer-to-Peer Unterrahmen einbindet, die mobilen Kommunikationsgeräten für eine direkte Kommunikation zwischen mobilen Kommunikationsgeräten zugewiesen sind, und dass sie ihren Versorgungsbereich derart in Segmente (200) unterteilt, dass gleichzeitige Übertragungen innerhalb desselben Peer-to-Peer Unterrahmens, die in verschiedenen Segmenten (200) durchgeführt werden, nicht miteinander interferieren,
**dadurch gekennzeichnet, dass** die mindestens eine Basisstation (103) zudem konfiguriert ist, eine Positionstabelle zu unterhalten, die einen Überblick über die aktuellen Positionen der Fahrzeuge (202, 203, 204, 205, 206, 207) in ihrem Versorgungsbereich behält.

11. Kommunikationssystem nach Anspruch 10, wobei die Basisstation (103) so konfiguriert ist, dass sie die Peer-to-Peer Unterrahmen kontrolliert.

12. Kommunikationssystem nach Anspruch 10 oder 11, wobei die Basisstation (103) konfiguriert ist, jedes Segment (200) im Hinblick auf die Zuweisung von Peer-to-Peer Unterrahmen zu mobilen Kommunikationsgeräten als eine unabhängige Zone zu behandeln, und/oder
wobei die Basisstation (103) konfiguriert ist, die Segmente (200) entlang von Straßen (201) auszurichten.

13. Kommunikationssystem nach einem der Ansprüche 10 bis 12, wobei die Basisstation (103) konfiguriert ist, die Segmente (200) auf der Basis der aktuellen Interferenzsituation innerhalb des Kommunikationssystems zu erzeugen, und/oder
wobei die Basisstation (103) konfiguriert ist, die Segmente (200) derart zu erzeugen, dass Fahrzeuge (202, 203, 204, 205, 206, 207) Cluster bilden, die weit genug voneinander entfernt sind, um gegenseitige Interferenz zu vermeiden, und/oder
wobei die Basisstation (103) konfiguriert ist, Fahrzeuge (202, 203, 204, 205, 206, 207) von Zeit zu Zeit zu unterschiedlichen Segmenten (200) zu gruppieren.

14. Kommunikationssystem nach einem der Ansprüche 10 bis 13, wobei die Basisstation (103) so konfiguriert ist, dass sie die Segmentierung ihres Versorgungsbereichs vom Rahmen zu Rahmen ändert, und/oder
wobei die Basisstation (103) so konfiguriert ist, dass sie die Segmentierung ihres Versorgungsbereichs dynamisch entsprechend vordefinierter Optimierungskriterien erzeugt, und/oder
wobei die Basisstation (103) so konfiguriert ist, dass sie die Segmentierung ihres Versorgungsbereichs erzeugt, indem sie die Größe der Segmente (200) an die lokale Fahrzeugdichte anpasst.

15. Basisstation für den Einsatz in einem TDD-basierten Kommunikationssystem gemäß einem der Ansprüche 10 bis 14, wobei die Basisstation so konfiguriert ist,
dass sie die Rahmen weiter partitioniert, indem sie Peer-to-Peer Unterrahmen einbindet, die mobilen Kommunikationsgeräten für eine direkte Kommunikation zwischen mobilen Kommunikationsgeräten zugewiesen sind, und
dass sie ihren Versorgungsbereich derart in Segmente (200) unterteilt, dass gleichzeitige Übertragungen innerhalb desselben Peer-to-Peer Unterrahmens, die in verschiedenen Segmenten (200) durchgeführt werden, nicht miteinander interferieren,
**dadurch gekennzeichnet, dass** die Basisstation zudem konfiguriert ist, eine Positionstabelle zu unterhalten, die einen Überblick über die aktuellen Positionen der Fahrzeuge (202, 203, 204, 205, 206, 207) in ihrem Versorgungsbereich behält.

## Revendications

1. Procédé de prise en charge de communications entre des véhicules dans un système de communications basé sur TDD comprenant au moins une station de base (103) et une pluralité de véhicules (202, 203, 204, 205, 206, 207) équipés de dispositifs de communication mobile,
dans lequel les ressources radio du système de communications sont réparties dans le temps en trames consécutives, les trames étant subdivisées en sous-trames de liaison descendante destinées à des transmissions d'une station de base vers les dispositifs de communication mobile et en sous-trames de liaison ascendante destinées à des transmissions des dispositifs de communication mobile vers une station de base (103),
dans lequel les trames comprennent en outre des sous-trames d'homologue à homologue attribuées à des dispositifs de communication mobile pour une communication directe entre des dispositifs de communication mobile, et
dans lequel une station de base (103) divise sa zone de couverture en segments (200) de telle manière que des transmissions simultanées dans la même sous-trame d'homologue à homologue effectuées dans différents segments (200) n'interfèrent pas les unes sur les autres,
**caractérisé en ce que** la station de base (103) gère une table de localisation permettant de suivre les positions actuelles des véhicules (202, 203, 204, 205, 206, 207) dans sa zone de couverture.

2. Procédé selon la revendication 1, dans lequel les sous-trames d'homologue à homologue sont organisées par la station de base (103).

3. Procédé selon la revendication 1 ou 2, dans lequel des dispositifs de communication mobile transmettent à des intervalles de temps périodiques un message d'enregistrement à la station de base (103),
dans lequel chaque message d'enregistrement envoyé par un dispositif de communication mobile comprend de préférence un ID du véhicule auquel ledit dispositif de communication mobile est associé, la position dudit véhicule, la direction de déplacement dudit véhicule et/ou un horodatage.

4. Procédé selon l'une quelconque des revendications 1 à 3, dans lequel des dispositifs de communication mobile utilisent une puissance de transmission réduite pour les transmissions en sous-trames d'homologue à homologue, comparativement à la puissance de transmission utilisée pour les transmissions en sous-trames de liaison ascendante.

5. Procédé selon l'une quelconque des revendications 1 à 4, dans lequel la station de base (103) traite chaque segment (200) comme une zone indépendante par rapport à l'attribution de sous-trames d'homologue à homologue à des dispositifs de communication mobile et/ou
dans lequel les segments (200) de la zone de couverture d'une station de base (103) sont alignés sur des rues (201).

6. Procédé selon l'une quelconque des revendications 1 à 5, dans lequel les segments (200) de la zone de couverture d'une station de base (103) sont créés sur la base de la situation actuelle en termes d'interférences dans le système de communications et/ou
dans lequel les segments (200) de la zone de couverture d'une station de base (103) sont créés d'une manière telle que des véhicules (202, 203, 204, 205, 206, 207) forment des grappes qui sont suffisamment distantes les unes des autres pour éviter toute interférence mutuelle et/ou
dans lequel des véhicules (202, 203, 204, 205, 206, 207) sont occasionnellement groupés en différents segments (200).

7. Procédé selon l'une quelconque des revendications 1 à 6, dans lequel une station de base (103) modifie de trame en trame la segmentation de sa zone de couverture et/ou
dans lequel une station de base (103) crée la segmentation de sa zone de couverture de manière dynamique en fonction de critères d'optimisation prédéfinis et/ou
dans lequel une station de base (103) crée la segmentation de sa zone de couverture en adaptant la taille des segments (200) à la densité locale des véhicules.

8. Procédé selon l'une quelconque des revendications 1 à 7, dans lequel des ensembles alternatifs de segments (200) sont définis, dans lequel une station de base (103) utilise pour chacune des trames de la station de base (103) un autre ensemble de segments (200) provenant desdits ensembles alternatifs de segments (200).

9. Procédé selon l'une quelconque des revendications 1 à 8, dans lequel un transfert intercellulaire d'un véhicule depuis une station de base - la station de base actuelle - vers une autre station de base - la nouvelle station de base - comprend les étapes au cours desquelles
ladite station de base actuelle suit la position d'un véhicule,
ladite station de base actuelle informe ladite nouvelle station de base de la position actuelle du véhicule lorsqu'elle détecte que le véhicule va quitter sa zone de couverture,
la nouvelle station de base crée une entrée temporaire dans sa table de localisation correspondant au véhicule, et
la nouvelle station de base commence à attribuer des sous-trames d'homologue à homologue destinées au véhicule.

10. Système de communications basé sur TDD avec prise en charge des communications entre des véhicules comprenant au moins une station de base (103) et une pluralité de véhicules (202, 203, 204, 205, 206, 207) équipés de dispositifs de communication mobile,
dans lequel les ressources radio du système de communications sont réparties dans le temps en trames consécutives, les trames étant subdivisées en sous-trames de liaison descendante destinées à des transmissions d'une station de base (103) vers les dispositifs de communication mobile et en sous-trames de liaison ascendante destinées à des transmissions des dispositifs de communication mobile vers une station de base (103),
dans lequel ladite au moins une station de base (103) est conçue pour subdiviser davantage les trames en intégrant des sous-trames d'homologue à homologue attribuées à des dispositifs de communication mobile pour une communication directe entre des dispositifs de communication mobile et pour diviser sa zone de couverture en segments (200) de telle manière que des transmissions simultanées dans la même sous-trame d'homologue à homologue effectuées dans différents segments (200) n'interfèrent pas les unes sur les autres,
**caractérisé en ce que** ladite au moins une station de base (103) est en outre conçue pour gérer une table de localisation permettant de suivre les positions actuelles des véhicules (202, 203, 204, 205, 206, 207) dans sa zone de couverture.

11. Système de communications selon la revendication 10, dans lequel la station de base (103) est conçue pour organiser les sous-trames d'homologue à homologue.

12. Système de communications selon la revendication 10 ou 11, dans lequel la station de base (103) est conçue pour traiter chaque segment (200) comme une zone indépendante par rapport à l'attribution de sous-trames d'homologue à homologue à des dispositifs de communication mobile et/ou
dans lequel la station de base (103) est conçue pour aligner les segments (200) sur des rues (201).

13. Système de communications selon l'une quelconque des revendications 10 à 12, dans lequel la station de base (103) est conçue pour créer les segments (200) sur la base de la situation actuelle en termes d'interférence dans le système de communications et/ou
dans lequel la station de base (103) est conçue pour créer les segments (200) d'une manière telle que des véhicules (202, 203, 204, 205, 206, 207) forment des grappes qui sont suffisamment distantes les unes des autres pour éviter toute interférence mutuelle et/ou
dans lequel la station de base (103) est conçue pour grouper occasionnellement des véhicules (202, 203, 204, 205, 206, 207) en différents segments (200).

14. Système de communications selon l'une quelconque des revendications 10 à 13, dans lequel la station de base (103) est conçue pour modifier de trame en trame la segmentation de sa zone de couverture et/ou
dans lequel la station de base (103) est conçue pour créer la segmentation de sa zone de couverture de manière dynamique en fonction de critères d'optimisation prédéfinis et/ou
dans lequel la station de base (103) est conçue pour créer la segmentation de sa zone de couverture en adaptant la taille des segments (200) à la densité locale des véhicules.

15. Station de base conçue pour un déploiement dans un système de communications basé sur TDD selon l'une quelconque des revendications 10 à 14, dans laquelle la station de base est conçue pour
subdiviser davantage les trames en intégrant des sous-trames d'homologue à homologue attribuées à des dispositifs de communication mobile pour une communication directe entre des dispositifs de communication mobile, et
diviser sa zone de couverture en segments (200) de telle manière que des transmissions simultanées dans la même sous-trame d'homologue à homologue effectuées dans différents segments (200) n'interfèrent pas les unes sur les autres,
**caractérisée en ce que** la station de base est en outre conçue pour gérer une table de localisation permettant de suivre les positions actuelles des véhicules (202, 203, 204, 205, 206, 207) dans sa zone de couverture.
